Europäisches Patentamt

(19) European Patent Office

Office européen des brevets

(11) Publication number: **0 087 860**
A1

(12) # EUROPEAN PATENT APPLICATION

(21) Application number: 83300587.9

(22) Date of filing: 04.02.83

(51) Int. Cl.³: **G 01 N 21/89**
G 02 B 27/17, G 02 F 1/33

(30) Priority: 10.02.82 JP 18848/82
10.02.82 JP 16329/82 U

(43) Date of publication of application:
07.09.83 Bulletin 83/36

(84) Designated Contracting States:
BE DE FR GB NL

(71) Applicant: KONISHIROKU PHOTO INDUSTRY CO. LTD.
No. 26-2, Nishishinjuku 1-chome Shinjuku-ku
Tokyo 160(JP)

(72) Inventor: Takahashi, Tokuji
No. 5614, Hino
Hino-Shi Tokyo(JP)

(72) Inventor: Maeda, Motoharu
Konishiroku Apart 136 No. 6-5-2, Tamadaira
Hino-Shi Tokyo(JP)

(72) Inventor: Oishi, Atsushi
Konishiroku Ohwada Ryo No. 2-5-19, Ohwada-Cho
Hachioji-Shi Tokyo(JP)

(74) Representative: Wood, Anthony Charles et al,
c/o MICHAEL BURNSIDE & PARTNERS 2 Serjeants' Inn
Fleet Street
London EC4Y 1HL(GB)

(54) Surface fault detector.

(57) A surface fault detector of the flying spot type comprises a light source (1), a rotatable polygonal mirror (16), and a light receiving element (6a,6b). An optical element such as an f.θ lens (26) is disposed in the light path between the rotatable polygonal mirror (16) and an object (3) to be inspected to tend to render more nearly constant both the size and scanning speed of the flying spot. An acousto-optical deflector (25) may be provided in the light path between the light source (1) and the rotatable polygonal mirror (16) to change the angle of incidence of the light beam upon the rotatable polygonal mirror (16) in a sense tending to render more regular the pitch of successive scans of the flying spot over the surface (4) under inspection.

FIG. 2

EP 0 087 860 A1

0087860

SURFACE FAULT DETECTOR

The present invention relates to a surface fault detector and more especially to a surface fault detector using a flying spot to detect any defect on transparent films, glass photographic plates and plastic material.

Surface fault detectors of flying spot type are used to inspect the surface and back of an object such as films and glass dry plates for any defects or scores and any variation in the thickness of coating applied over the surface of the object.

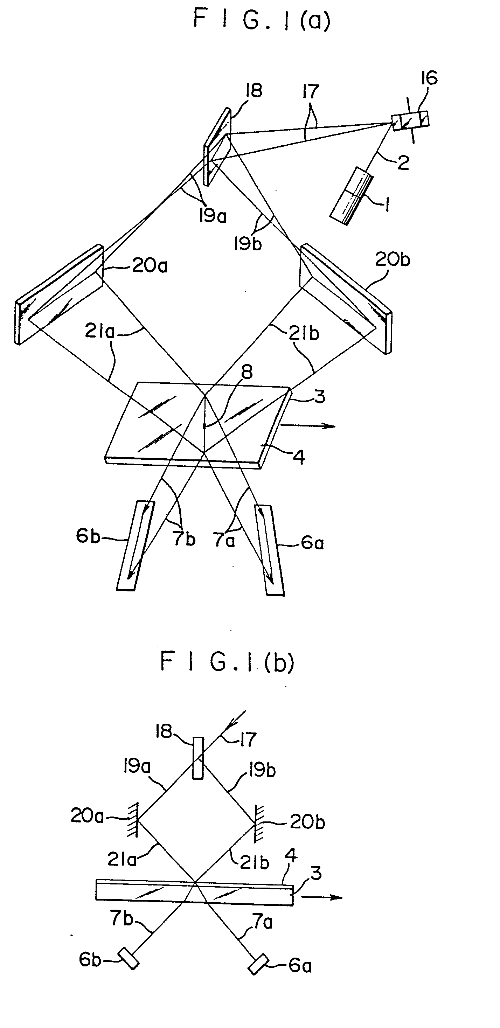

In the conventional surface fault detector of the flying spot type, as shown in Fig. 1, a light source 1 generates a laser beam 2 which is reflected by a rotatable polygon mirror 16. A scanning light beam 17 reflected from the rotatable polygon mirror 16 is then separated by a semitransparent mirror 18 into a transmitted beam 19a and a reflected beam 19b. The transmitted beam 19a is then reflected by a reflector mirror 20a as a reflected light 21a while the reflected beam 19b is reflected by a reflector mirror 20b as a reflected light 21b. These two reflected lights 21a and 21b are directed onto the same point on the object 4 of a glass dry plate 3 simultaneously (or virtually the same point within a specified time limit) to scan the dry plate 3. Light beams 7a and 7b that have passed through the glass dry plate 3 are received by light receiving elements 6a and 6b respectively.

If there is any defect 8 on the object 4 of the glass dry plate 3, the light receiving elements 6a and 6b generate abnormality signals simultaneously indicating there is a defect on the surface and give them to the output circuit. But if there is a defect on the back side of the dry plate 3, light receiving elements 6a and 6b generate successive abnormality signals on different scans.

A light detector such as photodiode array located on the path of light not radiated against the object 4 generates a synchronizing signal which is sent to a signal processing circuit where it is used for the processing of fault information containing the position of a detected fault.

In this type of fault detector using a flying spot, the rotating angular velocity of the rotatable polygon mirror is constant. Thus, when the light beam is swept linearly over the object, the scanning speed is not constant. Also in the case where the lens is located behind the rotatable polygon mirror, the scanning speed is not constant if a common lens is used. Therefore, to detect the position of the defect in the scanning direction, a complex circuit is needed. And also the detector sensitivity in the scanning direction depends on the frequency characteristic of the light receiving element and the signal amplifier and, it is defective to vary the sensitivity. This in turn causes large sensitivity variation. With common lenses used, there is likely to be variation in the size of light beam diameter radiated against the object. To prevent this variation it may be considered as a possible means to use a concave mirror to change the length of light path. But this makes the optical system complex. Another possible measure is to deform the object to be inspected but this requires high technique of handling the object.

In other words, since the common lenses are used in the optical element, the spot size of the light beam and the scanning speed at the central portion of the object differ from those at the laterally peripheral portions. For the improvement of the position accuracy and the sensitivity in the direction of width of the object, it is desired that the beam focus position and the scanning speed be constant.

The conventional flying spot type surface fault detector has still another defect. That is, there is a variation in the angle of each surface of the rotatable polygon mirror 16 due to manufacturing error, adversely affecting the pitch of the scanning light beam. The variation in the light beam diameter and the scanning velocity cause variation in sensitivity in the direction of width of object and deteriorate the spot position accuracy.

The object of this invention is to provide a surface fault detector with high accuracy which is improved on the abovementioned drawbacks.

Another object of this invention is to provide a surface fault detector which is improved on the abovementioned drawbacks and which has a constant size of light beam and can sweep over the object at a constant speed.

The flying spot type surface fault detector of this invention consisting of a light source, a rotatable polygon mirror and a light receiving element, is characterized in that an $f \cdot \theta$ lens is interposed between the rotatable polygon mirror and the object to be inspected.

Another feature of the flying spot type surface fault detector of this invention is that a correction means is provided on the light path between the light source and the rotatable polygon mirror to change the incidence of the light beam radiated against the rotating mirror and that an optical element is provided midway between the rotatable polygon mirror and the object being inspected to make constant the scanning speed on the object surface and the size of light beam.

The correction means may be an acousto-optic deflector and the optical element may be an f·θ lens.

Other objects and features of this invention will become apparent from the following description with reference to the accompanying drawings.

Fig. 1(a) is an explanatory drawing showing the light path from the light source to the light receiving element in the conventional flying spot type surface fault detector;

Fig. 1(b) in an explanatory drawing showing the light path from the semitransparent mirror to the light receiving element;

Fig. 2 is an explanatory drawing of the device of this invention;

Fig. 3 is a schematic drawing of the acousto-optic deflector used in this invention;

Fig. 4(a) is an explanatory drawing showing the locus of the scanning light beam obtained when a correction means consisting of an acousto-optic deflector is used;

Fig. 4(b) is an explanatory drawing showing the locus of the scanning light beam obtained when the correction means is not used;

Fig. 5(a) is a diagram showing how the height of the image on the focus plane varies as the incidence of scanning light beam coming into the optical system of this invention changes; and

Fig. 5(b) is a diagram showing the change in the scanning speed.

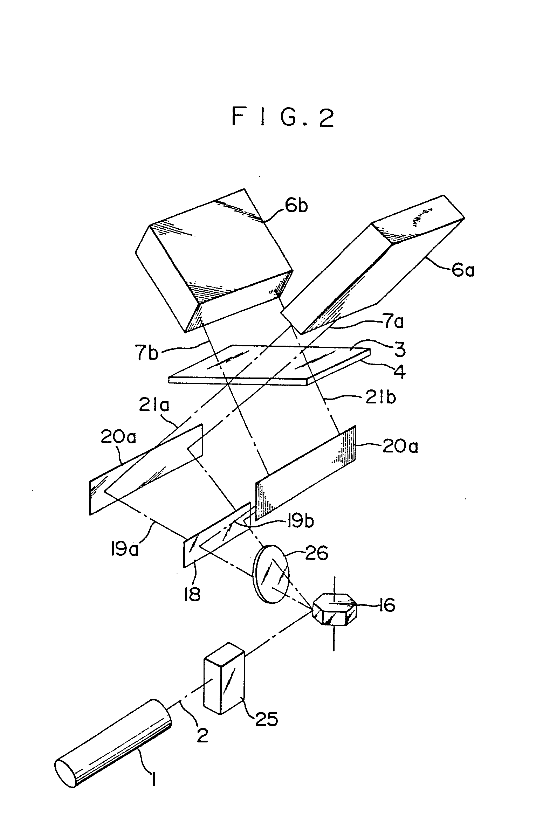

In this invention an $f \cdot \theta$ lens 26 is provided on the light path between the rotatable polygon mirror 16 and the glass dry plate 3 which is to be inspected as shown in Fig. 2. The $f \cdot \theta$ lens focuses on the object surface a beam deflected by a mechanical rotating mirror or an electronic deflector such as electric optical element and acousto-optic element in such a way that the size of the light beam is always constant and the scanning speed on the focal plane is constant when the beam deflecting angular speed is made constant. The ideal image height $Y'$ is $Y' = f \cdot \theta$ where the $\theta$ is the deflecting angle of the incident beam and $f$ is the focal distance.

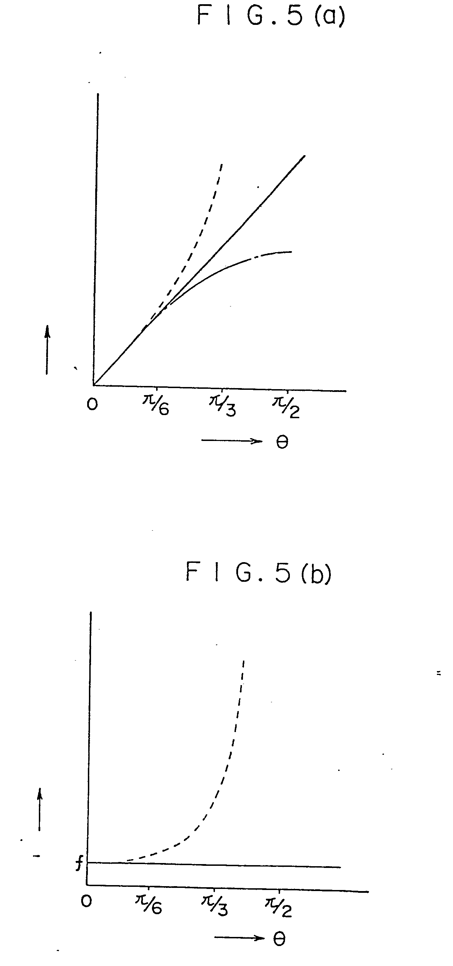

On the contrary a commonly used photographic lens has the ideal image height of $Y' = f \cdot \tan\theta$. Fig. 5(a) shows the ideal image height with respect to the incident beam deflecting angle $\theta$ for the commonly used photographic lens, $f \cdot \theta$ lens and Fourier transformation lens represented by the dotted curve, one-dot line and solid curve respectively. Fig. 5(b) shows the scanning speed on the focal plane with respect to the incident beam deflecting angle θ of the general photo-
graphic lens and the f·θ lens, as represented by the
dotted line and the solid line.

The features of this embodiment may be summarized
as follows.  The variation in the beam size is minimized
and the light beam can be sweeped over the surface of
an object at the constant speed.  This makes the detection sensitivity independent of the frequency characteristic of the light receiving element and the signal
amplifier thereby reducing the variation in the detection sensitivity in the scanning direction.  Another
feature is that since the light scanning position is
in proportional relationship with the scanning time,
the fault detection signal processing circuit for determining the position of defect can be made simple.

Next, another embodiment of this invention is
explained in the following.

As shown in Fig. 2, the laser beam 2 from the
light source 1 is radiated against the rotatable
polygon mirror 16 by way of a correction means 25
which corrects the incidence of the light beam according to the individual face angle of the rotatable
polygon mirror 16.  The laser beam reflected by the
rotatable polygon mirror 16 is directed, through the
optical element 26 which makes the light beam size
constant, against the semitransparent mirror 18 by
which the beam is separated into the transmitted light beam 19a and reflected beam 19b. The transmitted and reflected beams are then reflected by the reflector mirrors 20a, 20b to focus upon the same point on the object.

In this embodiment the correction means 25 is comprised of an acousto-optic deflector.

Because of the acousto-optic deflector used, it is possible to correct the incidence of light radiating upon the object and thereby minimize the variation of incidence which might be caused by the variation of the rotating mirror axis and the variation in the mirror surface angle (this may arise during polishing process). This method of correcting the light beam incidence is especially simple and accurate as compared with other means of correction.

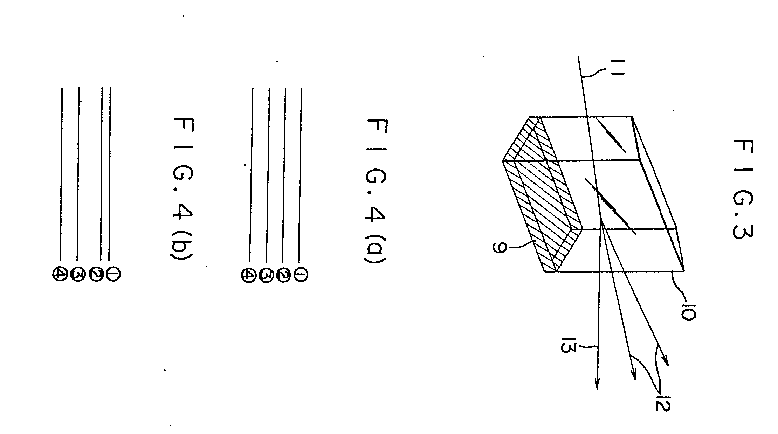

The acousto-optic deflector used with this invention consists, as shown in Fig. 3, of a plate of piezoelectric element 9 and an acousto-optic medium 10 attached to it. By changing the frequency of the signal applied to the piezoelectric element 9, it is possible to change the crystal structure of the acousto-optic medium 10 thereby changing the angle of the diffracted light beam 12 with respect to the incident light 11. Reference number 13 represents a secondary refracted light beam.

The effect of correcting the incidence angle of light beam according to the shaft angle of rotatable polygon mirror 16 is clearly shown in Fig. 4. That is, when the acousto-optic deflector is used, the locus of the scanning beam center is as shown in Fig. 4(a) with the object being moved at a constant speed. Fig. 4(b) shows the locus of the scanning beam center when the acousto-optic deflector is not used.

The optical element 26 used in this invention is to make constant the size of the light beam reflected from the rotatable polygon mirror 16. In the surface fault detector it is required to find very small defects and therefore a variation in the size of the light beams may cause errors in the fault detection. As the optical element 26 the $f \cdot \theta$ lens is used.

Referring to Fig. 2, the scanning light beam is traced in the following.

The light beam from the light source 1 is deflected by the correction means 25 consisting of a deflector according to the individual surface angle of the rotatable polygon mirror 16 and then radiated against the rotatable polygon mirror 16. The beam reflected from the rotatable polygon mirror 16 is directed through the optical element 26 against the semitransparent mirror 18 which separates the beam into the transmitted beam 19a and reflected beam 19b. The transmitted and reflected beams 19a, 19b are reflected by the reflector mirrors 20a, 20b. The reflected beams 21a, 21b from the reflector mirrors 20a, 20b are radiated at the same point on the object 4 of the glass dry plate 3 at the same time (or radiated at virtually the same point within a specified time). The two beams passes through the glass dry plate 3 as the transmitted light beams 7a, 7b and received by the light receiving elements 6a, 6b.

As can be seen from the foregoing, since this embodiment employs the correction means 25 made up of a deflector and the optical lens 26, the variation in the light beam pitch can be minimized with ease. Further, the compact optical system used in this embodiment minimizes the variation in the light beam size thereby greatly improving the fault detection accuracy and the beam position accuracy.

While it is possible to use an ordinary light beam as the scanning beam, it is preferable to use a small diameter laser beam having a directivity. Although the transmitted light method is used in the detection of fault, it is also possible to use a reflection method.

CLAIMS:

1. A surface fault detector of the flying spot type comprising a light source (1), a rotatable polygonal mirror (16), and a light receiving element (6a, 6b), characterized by an optical element (26) disposed between said rotatable polygonal mirror and an object to be inspected to tend to render more nearly constant both the size of the flying spot on the object surface and the scanning speed of the spot across the surface.

2. A surface fault detector as defined in claim 1, wherein said optical element (26) comprises an f.θ lens.

3. A surface fault detector as claimed in claim 1 or claim 2 characterised by a correction means (25) disposed in the light path between said light source and the rotatable polygonal mirror to change the angle of incidence of the light beam upon said rotatable polygonal mirror in a sense tending to render more regular pitch of successive scans of said flying spot over a surface under inspection.

4. A surface fault detector as defined in claim 3, wherein said correction means (25) comprises an acousto-optical deflector.

5. A surface fault detector as defined in claim 4, wherein said acousto-optical deflector (25) consists of a piezoelectric plate element (9) and an acousto-optical medium (10) attached to said piezoelectric plate element.

F I G . I (a)

F I G . I (b)

F I G. 2

FIG.3

FIG.4 (a)

FIG.4 (b)

F I G. 5 (a)

F I G. 5 (b)

# EUROPEAN SEARCH REPORT

Application number

EP  83  30  0587

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | US-A-4 110 047  (T. TAKAHASHI) <br> * Claim 1; abstract; figure 4 * | 1 | G 01 N    21/89 <br> G 02 B    27/17 <br> G 02 F     1/33 |
| Y | EP-A-0 018 787  (XEROX CORP.) <br> * Claims 1, 5; abstract; page 4, line  10 - page 5, line 17; figure * | 1,2 | |
| Y | US-A-4 179 183  (M. TATEDKA) <br> * Claim  1;  column 2, line 65 - column  3,  line  20;  column 17, line  55  -  column  18, line 12; abstract; figure 32 * | 1,2 | |
| Y | DE-A-2 927 101  (PITNEY-BOWES INC.) <br> * Claims 1, 2; page 9, last paragraph  -  page  10,  paragraph 1; page 17; figure 1 * | 1,3,4 | |
| Y | US-A-4 203 672  (E.H. SMITH JR.) <br> *  Claims 1, 3, 8; abstract; column  1,  lines  5-49;  column  3, lines  52-67; column 4, line 63 - column 5, line 5; figure 1 *. | 1,3,4 | G 01 N    21/00 <br> G 02 B    27/17 <br> G 02 F     1/33 |
| A | DE-A-1 937 787  (WESTERN ELECTRIC CO. INC.) <br> * Claim 1; page 11; figure 1 * | 4,5 | |
| | ---       -/- | | |

TECHNICAL FIELDS SEARCHED (Int. Cl. ³)

The present search report has been drawn up for all claims

| Place of search | Date of completion of the search | Examiner |
|---|---|---|
| BERLIN | 02-05-1983 | HOFMANN D G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82

European Patent
Office

| DOCUMENTS CONSIDERED TO BE RELEVANT | | | Page   2 |
|---|---|---|---|
| Category | Citation of document with indication, where appropriate, of relevant passages | Relevant to claim | CLASSIFICATION OF THE APPLICATION (Int. Cl. ³) |
| A | DE-A-2 911 528  (RICOH CO.)<br>* Claim 1;  page 10, last para-<br>graph - page 13, line 25; figures<br>1-3 *<br><br>----- | 1,2 | |
| | | | **TECHNICAL FIELDS SEARCHED (Int. Cl. ³)** |
| | The present search report has been drawn up for all claims | | |

| Place of search<br>BERLIN | Date of completion of the search<br>02-05-1983 | Examiner<br>HOFMANN D G |
|---|---|---|

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    ........................................................................

& : member of the same patent family, corresponding
    document

EPO Form 1503. 03.82